# EUROPEAN PATENT APPLICATION

(11) **EP 1 324 217 A1**
(43) Date of publication of application: **02.07.2003**
(21) Application number: 01410161.2
(22) Date of filing: 18.12.2001
(51) Int. Cl.: G06F 17/30

(54) **Process and cache system for providing an electronic service through a telecommunication network**

(71) Applicant: Hewlett-Packard Company, A Delaware Corporation, Palo Alto, CA 94304 (US)
(72) Inventor: Raffaele, Eric, 31100 Toulouse (FR); Brebner, Gavin, 38410 St Martin d'Uriage (FR)
(74) Representative: Lloyd, Richard Graham (GB)

(57) **Abstract**

Process for executing an electronic service which is downloadable from a service server throughout a telecommunication network, such as an Internet network for instance, which process comprises the steps of:
- constructing an electronic package, such as a .jar file for instance, which comprises the methods and classes for embodying a service executable by a client computer and further involving one additional cache control file for the purpose of controlling the caching operation of said electronic package within a service cache;
- downloading said electronic package within a service cache of an intranet and extracting from said package said cache control file;
- caching said electronic service within said proxy in accordance with the information contained within said cache control file.

## Description

### CROSS-REFERENCE TO RELATED APPLICATIONS

In copending application EP-A-....., entitled "*Process for executing a downloadable service receiving restrictive access rights to at least one profile file"--,* assigned to the assignee of the present invention and incorporated herein by this reference, there is described a method for downloading of an executable service from a web server, for instance, within the web browser of a user's computer which receives a confined run time environment associated with specific methods and profiles access for the purpose of securing the access to the high-value personal data within the profiles of the customer's. Although not limited thereto, the present invention employs such a method in one of its preferred embodiments.

### Technical field of the invention

The invention relates to communication systems and more particularly to enhancing the access to electronic services available through a telecommunications network.

### Background art

The progress of communications and the computers, particularly with the development of the Internet, has resulted in the development of an era of information and services. With a single personal device, such as a Personal Computer (P.C.), a Personal Digital Assistant (P.D.A.) fitted with a portable operating system and even sophisticated mobile telephones, the customer can get access to a wide range of information and services, including electronic business applications.

With the progress of the information technology, the "informative" part of the data takes the prominent role in the communication exchanged between the service provider and the customer. This substantially modifies the internal mechanisms to be carried out within the machines. Computers are traditionally operated by means of the installation of software that requires a long and complex installation procedure. On the contrary, the concept of "services" does not focus on the use of the software or the installation of complex software material. By accessing a service, a customer is given the access to valuable information which is provided by a service provider, which information, when combined with personal data extracted from her/his own personal profiles, is of high interest and value to the customer. This leads to a clear distinction over the traditional way of operating softwares which, when carried out after a complex software installation process, results in a substantial change within the configuration of the user's equipment.

The concept of "service" gives the primary focus on the "informative" part of the data and further emphasizes the particular difficulty in arranging and manipulating such data. Many commercial applications may result from the development of the concept of a service.

EP-A-1118949; entitled *"process and apparatus for allowing transaction between a user and a remote served"* by G. BREBNER et al, assigned to the Assignee of the present patent application discloses the use of a profile containing technical data for the purpose of improving and extending the negotiation possibilities between a customer and an product or accessories providers.

Generally speaking, in order to provide a valuable and high-level service to a customer, a service provider needs to combine both general-purpose informative data with data which is personal to one given customer. The use of profile files is proving to be a very promising field of development for providing high-value and personalized services to the customers. While the customers profile is of high interest for the service providers, it is important that these profile files be protected against any misuse and unauthorized exploitation.

More particularly, the customers feel more and more concerned with the problem of privacy of their private data and the risk of any misuse of such information.

Solutions have been developed that have as their goal to protect sensitive data belonging to customers. EP-A-1118950 entitled "method for a personalized access to the Internet network" by G. Brebner et al., assigned to the Assignee of the present application discloses the use of profile data within the customer's computer, without any dissemination of that data to an external web server for the purpose of a transaction.

While the above mentioned prior art techniques can result in a high level of protection of the customer's sensitive data, it is still desired to provide a higher level of flexibility in the use of such downloadable services which, in general, require a continuous Internet access to the web to be maintained for the service to be usable.

### Summary of the invention

The present invention, in at least a preferred embodiment, achieves this object through a process for providing an electronic service through a telecommunication network, said process involving the steps of:
- constructing an electronic package including the code and data required for the execution of the service, and cache control information;
- transmitting said electronic package to a caching device for the purpose of caching said service in accordance with said cache control information.

In this way, when the electronic service has been cached within the proxy, any device which can communicate within the intranet can take advantage of the existence of the service package existing within the proxy even when the internet connection is discontinued.

In one particular embodiment, the electronic package is a jar package which comprises the method and classes for embodying a service executable by a client computer and further involving one cache control file for the purpose of controlling the caching operation of said electronic package within a service cache.

Preferably, the cache control file comprises a first field which defines whether the electronic service is cachable or not, a second field which defines the time of validity of said electronic service and, if necessary, if said service cache is requested to suppress the current service package and download an up-to-date version of the latter after the expiration of said validity. A third field is used for defining the dependencies of the considered electronic service, for example such dependencies could be the Uniform Resources Locators (U.R.L.) of resources required for the execution of the service.

This use of the cache control file existing within the electronic package allows a suitable level of control to be maintained of the service which is downloaded within the service cache at the request of a client. Once the service has been cached, then the user may execute the latter from any other device, for instance a Portable Digital Assistant and even a GSM mobile telephone in accordance with the information contained within the cache control file.

The invention also provides a process for executing an electronic service within a device connected to a private intranet network; characterized in that it involves the steps of:
- transmitting a request for said electronic service to a caching device located within said private communication network;
- determining within said caching device whether said service is already cached and, if so, receiving and executing said electronic service from said caching device.

Another aspect of the invention provides a cache system for electronic services to be distributed to a set of devices attached to an intranet network. The cache system is designed to receive downloadable services from a service server throughout a telecommunication network, such as an Internet network for instance. Each service is packaged under the form of an electronic file comprising classes and an additional cache control file. The service cache comprises
- means to receive said downloadable service;
- means for storing said downloadable services;
- means for extracting the information from said cache control file and for controlling the caching of said service accordingly.

Preferably, the service cache reads the contents of the cache control file and comprises means for automatically downloading a more recent version of said downloadable service after the expiration of a period defined within said cache control file.

In a preferred embodiment, the cache system uses the information contained within said cache control file for the purpose of storing and maintaining a table of dependencies corresponding to the different services being downloaded and stored, said dependencies defining the condition of use of the services.

### Description of the drawings

An embodiment of the invention will now be described, by way of example only, with reference to the accompanying drawings, wherein:
Figure 1 shows a typical environment of use of the service being cached within cache subsystem.
Figure 2 illustrates the architecture of a service.
Figure 3 is a flow chart of the process for installing a service within said cache subsystem.
Figure 4 is a flow chart of the process for executing a service via one device, for instance a PDA device.

### Description of the preferred embodiment of the invention

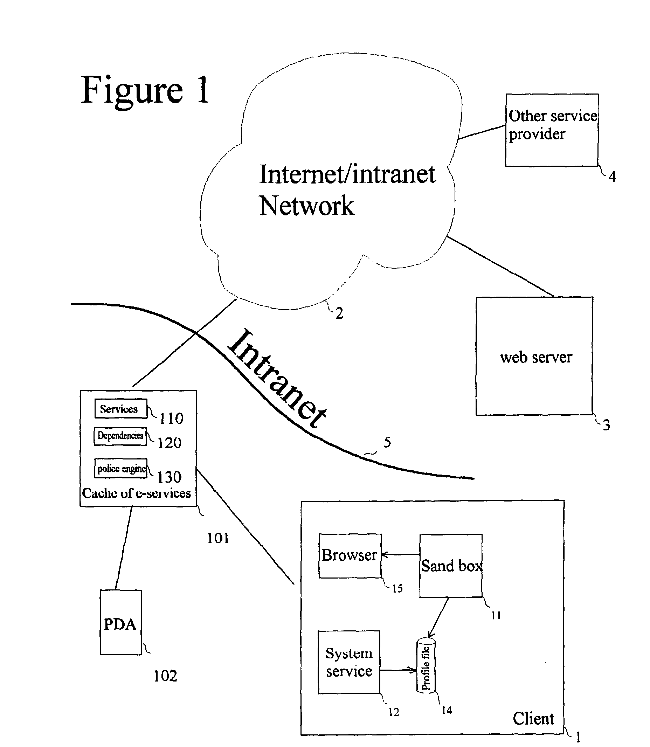

With respect to the figure 1 there is shown the basic principle of the process for downloading and caching an electronic service in accordance with the present invention.

As will be shown, the downloadable service is a temporary or consumable service which is dedicated to be launched within an existing sandbox in a client computer and which receives some access rights to the user's profile. In this context, downloading means sourcing the service from a remote device. The electronic service is implemented through some form of executable object, which can be invoked when a client requests the corresponding functionality. The downloading of the service which is hereinafter described permits to transfer the executable object to the client for the purpose of execution of that object. A specific container or so-called *electronic* package is used for allowing the transfer of the service.

The preferred embodiment will be described with a service which is downloaded in the form of a jar file contained within a Hyper Text Mark-up Language (H.T.M.L.) webpage. Clearly, this is only one example of realization and other embodiments could be contemplated. Any other kind of archives files including compiled codes allowing execution of the service can be used, even if the .jar format has revealed to be very advantageous for providing in one single package the methods and classes required for the execution of the service.

As shown in figure 1, a user's computer 1 is connected to an intranet network represented by boundary line 5 and which communicates through a communication network 2, such as the internet network for instance. As known by the skilled man, an intranet network is a private TCP/IP network which is typically deployed by an organization that conforms to the traditional internet standard. Generally speaking, the same protocols are used within an intranet network and within the internet but the access to the former is reserved to a limited number of persons belong to the corresponding organization while the latter shows accessibility to the wide public. Intranets are connected to the internet via secure gateways known as firewalls.

With respect to figure 1 again the intranet network includes a service cache 101, operates as a proxy which, as known by the skilled man, is used for allowing requests originating from devices within the intranet to be forwarded on behalf of those devices to outside machines, the direct connection being blocked for instance for security purpose.Therefore, all appropriate requests submitted from inside the intranet are first forwarded to the proxy, which then accesses the remote outside machines and then returns the results to the original requestor. Service cache 101 further includes a caching area for the services which are requested by the different devices forming part of the Intranet network 5, for instance client computer 1, but also a Personal Digital Assistant (P.D.A.) 102 communicating via a wireless or bluetooth link or even a GSM mobile telephone (not shown in figure 1). Via the service cache 101, all the devices of the intranet 5 can access to a service portal 3 which is arranged to receive and to process service requests which will be described hereinafter in detail. A web server 4 - for instance a travel agency portal - may be dedicated to receive air flight bookings or reservation requests, for instance.

The user's computer 1 - or client - includes a web browser 15 which is, for instance, *Internet Explorer 4* or later (manufactured by Microsoft Corp.) or *Netscape Navigator* (manufactured by Netscape Communications Corp. The web browser is used for accessing HTML pages located from web server 3 and 4 and, when appropriate, for downloading the applet therein included.

The services cache 101 provides the caching of a set of services, including the downloading of those within the cache and the handling of sophisticated functions such as the automatic update of the services when this is requested by the service providers.

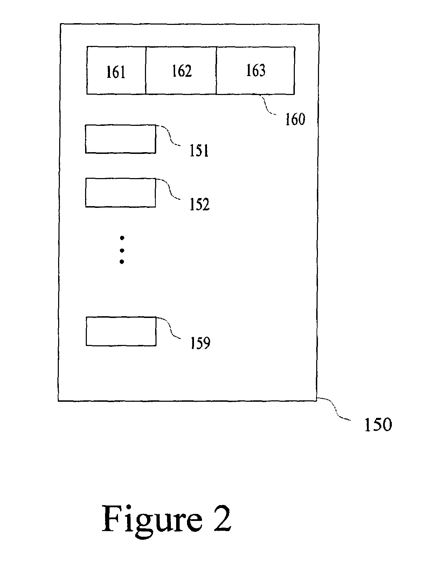

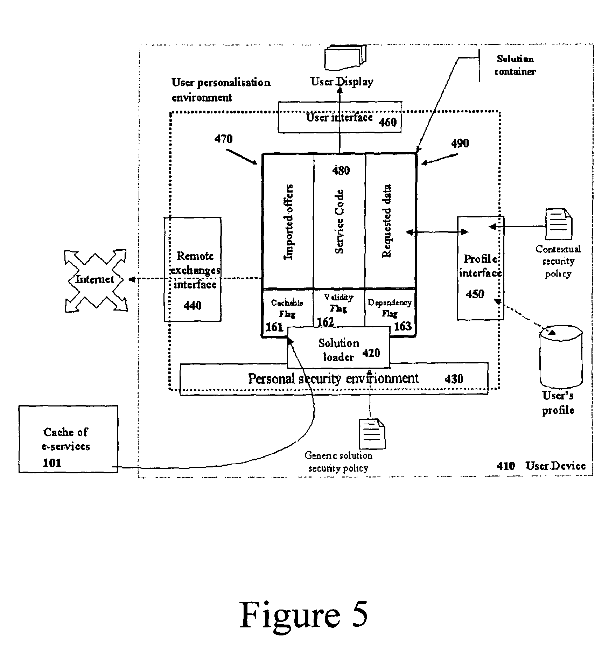

For this purpose a new structure of electronic service is arranged which is illustrated in figure 2. Electronic service is packaged within an electronic archive file 150, such as a .jar file for instance, and which includes the java methods and classes (classes 151, 152 and 159 being illustrated in the figure) required for embodying a service, and more precisely the service code and data imported within client computer 1 which, when combined with the personal data existing within that computer, can provide a useful service for the customer. The structure of the service will be more particularly described with reference to figure 5. In addition to the methods and classes of the electronic service, the archive .jar package file further includes an additional file 160 - a so-called cache control file - which is used for the purpose of controlling the caching of the service within service cache 101.

In the preferred embodiment of the service cache process, cache control file 160 includes a first field 161 which contains an information element dedicated to determine whether the considered archive file corresponds to a service which is cachable. A second field 162 defines the period of validity of the considered service and, in addition, the period at the expiration of which the service should be renewed or updated by the service cache 101 and, further, a third field 163 defines the dependencies of the considered electronic service, that is to say the precise resources which are required for the purpose of the execution of the electronic service.

The first and second fields of the cache control file permits a wide control of the execution of the service, even when the service is being downloaded within the private intranet network. This is most useful for the electronic service providers who may clearly wish to keep the control on the use of the service even when the electronic package has been forwarded to the caching proxy. The first field permits to force avoidance of caching and permits the service provider to ensure that each request for service will be clearly reforwarded to it and will not be cached. Many examples of non cachable services - from the point of view of a service providers - can be contemplated, such as on-line auctions services, stock quotes, times of day etc... The process which is hereinafter described clearly permits a wide number of new services to be offered to the public. The second field completes the control which is offered to the service provider on the use of the service since it permits to force the caching device to re-download a considered electronic service after the expiration of a given period. Time to live service clearly permits effective caching for a limited time. This is most useful for some specific services, i.e. on-line weather forcasts which should clearly remain valid only a limited period.

Clearly, the use of the first and second fields provides a substantial advantage to the potential service providers since they permit the control of the availability of the service based on billing/contracts constraints.

The dependencies field is particularly useful in view of the portability of the electronic services in a set of numerous devices attached to the intranet network 5 and communicating through the service cache 101. By reciting the dependencies which are required for the execution of the service, service cache will be given the possibility, as will be described hereinafter in further detail, to prevent the execution of the service if one particular condition is not fulfilled on the particular device on which the user tries to execute the service. Such condition or dependency could be, for instance, the existence of a sufficient amount of processing resources within the device or the existence of a security package keys required for the execution of the service.

In one embodiment, the third field dedicated to the dependencies defines a particular URL of an additional file where the different resources are recited, the latter file being also cachable within service cache 101. Alternatively, the definition of the dependencies can be defined within a separate file which can also be incorporated within the .jar archive file.

More preferably, the definition of the dependencies can take advantage of the use of the eXtended Mark-up Language (XML) standard defined by the World Wide Web Consortium (W3C) and which is associated to Document Type Definition (DTD) file. The DTD file defines the rules for how the elements, attributes, and other data in an XML-encoded profile are defined and logically related.

Once received within service cache 101, the electronic package 150 is stored within a service database 110 shown in figure 1, and the dependencies will be recorded within a dependency file 120 as will be explained hereinafter.

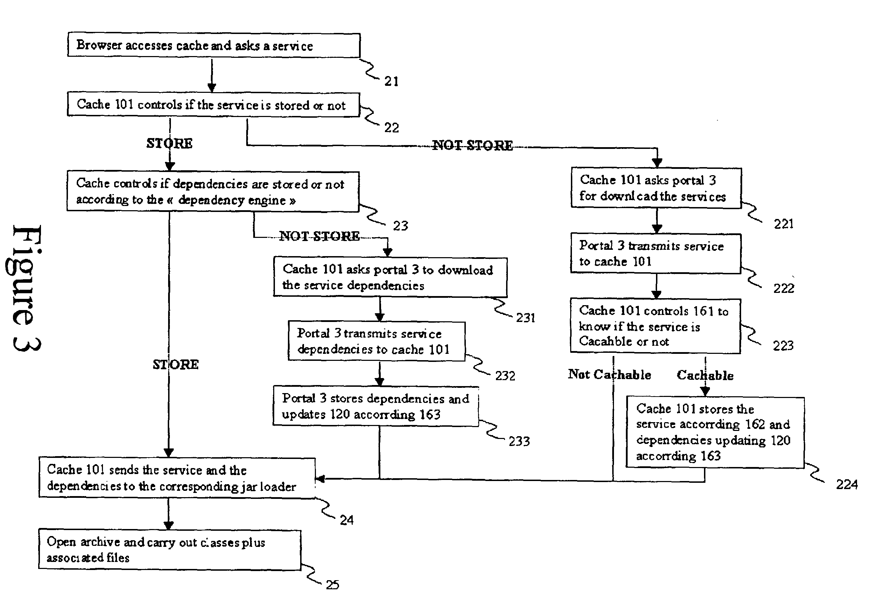

With respect to figure 3 there will now be discussed the basic process which is executed when a client is requesting the execution of an electronic service within e-service cache 101, preliminary to the use of the latter by the different devices 1 or 6.

In a step 21, the user sets up a connection to the electronic service portal 3 using the appropriate URL of the web portal, such as, for instance, http://www.hp.eservice.com. Clearly, the communication can take advantage of the widely used Internet protocols, and particular the HyperText Transfer Protocol (HTTP). In the preferred embodiment, the local agent issues a request for transaction which is embedded into a HTTP GET request which is recognised at every level, and particularly by every proxy. The particular format of the HTTP GET request is defined in the well-known rules laid down in the Request For Comments (RFC) 2.6.1.6, which are available at the following address http://www.w3.org/protocols.

The user's request is received by the service cache 101 which determines in a step 22 whether the requested electronic service is already stored within service database 110 or not.

If the service is not within the cache, then the request is forwarded in a step 221 to the service portal 3 which prepares the electronic package containing the electronic service. The construction of an electronic archive file comprising the methods and classes useful for embodying a service can be found in co-pending European patent application "Process for executing a downloadable service receive restrictive access rights to at least one profile file", and the description of which is herein incorporated by simple reference.

In the preferred embodiment, the service is downloaded in the form of a package file (such as a .jar file) which is transmitted in a step 222 by the service portal 3 and which is received by services cache 101. The .jar file contains the different classes which are required for embodying the service and, in addition, an supplementary cache control file used for the purpose of controlling the caching function of service cache 101.

As described above in detail, the cache control file includes a set of different fields which are assigned specific functions executed within the service cache 101, and particularly the control of the caching of the service. A first field 161 is used and decoded by service cache 101 in a step 223 for the purpose of determining whether the service contained within the jar file is actually a cachable service, i.e. a service which the portal service provider 3 acknowledges as being cachable.

In the case where the service is cachable, then service cache 101 reads in a step 224 the second field 162 of cache control file for the purpose of determining whether the considered electronic service needs to be updated at regular intervals by service cache 101 and, if so, the frequency of the update. This second field is used, for instance, to control the automatic update of a cachable e-services, for instance every week.

Cache control file further includes a third field 163 which is representative of the dependencies of the electronic service, with respect to other resources which are defined by a URL, for instance. A wide variety of dependencies may be used and controlled in accordance with the particular application which is contemplated. For instance, one dependency could be based on the processing resources which are required in order to successfully execute the services locally. Thus, if the service requires a great deal of resources, the dependencies will prevent the user from trying to execute such service on an insufficiently powerful system, such as a PDA.

It will be understood that many different types of dependencies could exist and be reflected in the dependency field 163. For instance, one service could well be based on the exchange of sensitive data and, therefore, one typical dependency could be for instance the existence and the availability of a set of security keys. In the case of a valid value for this field, the cache updates during step 224 a dependency table 120.

By means of these three control fields which are included within the cache control file received with the .jar file, there is provided the possibility to automatically control the receiving of the .jar file, and the availability of the resources required for executing the services. Therefore, the e-service cache 101 receives the .jar control file from the service providers, and analyses them in accordance with the information existing within the cache control file for the purpose of controlling the caching operation. This is a deviation from the known technique since, generally speaking, the .jar file which can be received by traditional proxy are generally not cached. On the contrary, the process which will be hereinafter described in more detail discloses how an electronic service, packaged within a .jar file, can be advantageously cached within service cache 105 in a controlled manner.

After the processing of steps 221-224, the process then proceeds to a step 24 consisting in the opening of the service by the jar loader.

When the test of step 22 reveals that the service requested by the client computer is already stored within the cache storage 101, then the process proceeds from step 22 to a step 23 where service cache 101 checks whether the list of dependencies which are requested for the processing of the particular service being considered is present. This is achieved by using the dependencies table 120 of figure 1.

If the dependencies test of step 23 shows a lack of resources, then the service cache 101 proceeds with the downloading of the corresponding resources, using the sequence of steps 231 and 232. In step 231 the service cache 101 transmits a request for the corresponding dependencies, which dependencies are transmitted back to the latter in step 232. When those dependencies are received, then, in a step 233, service cache 101 stores the latter and updates dependencies table 120 in accordance with the particular field 163 being contained within cache control file 160.

In the case where the dependencies are already present within the Intranet 5, then the service cache 101 proceeds with a step 24, where the service cache 101 starts the processing of the latter and particularly selects the appropriate jar loader. The jar loader starts by checking the signature and validating it in accordance with the known java security mechanisms. In the case where the signature is corrupted, the service code is discarded by the java security mechanisms. The processing of signatures and the security manager depends upon the particular web browser being used. Such mechanisms are well known by the skilled man and will not be further elaborated on. More information on java security mechanism may be found in the following references, Java Security from Scott OAKS, Edition O'Reilly and Java Cryptography, from J. KNUDSEN, Ed. O' Reilly. If the signature is correct, then service cache 101 transmits the service to the browser 15 within client computer 1.

An extended sandbox 11 is launched when a service is to be received by the client machine, as will be described hereinafter. The extended sandbox is arranged for organizing a restricted access to the user's profile file. As known by the skilled man in java programming, the security is based on three distinctive elements forming the sandbox: the Byte Code Verifier, the Class loader, and the Security Manager. Together, these three elements perform load and run time checks to restrict file system and network access, as well as access to browser internals.

The profile file is used for gathering, when appropriate, the user's personal data possibly combined with technical information concerning the environment of the user's machine, user's comportments, habits and preferences. As most users are not well versed in the field of computers, it can be advantageous to organise one particular section of the profile file with technical information which is automatically collected by system service 12 of figure 1. System service 12 is based on a so called *sysinfo.exe* executable file which extracts system information directly from the SMBIOS tables, or interrogates the Distributed Management Interface (DMI, or Windows Management Instrumentation (WMI) as known from Microsoft. As known by the skilled man, the DMI interface is an Application Programming Interface (API) that consists of a set of routines that are called for accessing the information stored within the BIOS layer. Basic information relating to the DMI programming interface can be found at the address http://www.dmtf.org/spec/html.

By using the DMI or WMI interfaces, or by accessing directly the SMBIOS level, the *sysinfo.exe* executable file accesses the different tables contained in the System Management BIOS (SMBIOS) for the purpose of reporting comprehensive information regarding the user's configuration, and required for completing a request for transaction. Such information includes the type of processor, the type of chipset, the number of hard disk drives, the particular graphic card being used, the serial number of the display, the reference of the operating system and so on. User related profile data can also be collected using explicit techniques such as specific forms, or using implicit techniques such as cookies, spyware, click stream tracking, or a mix of these techniques.

In one embodiment, the profile file(s) can be arranged in a hierarchical manner, with different sections containing information of different categories, and the profile file is embodied under the form of an known eXtended Macro Language (XML) standard which is defined by the World Wide Web Consortium (W3C) and which is associated to Document Type Definition (DTD) file.

In one embodiment, the profile may comply with the recommendations provided by the CPEX (Customer Profile EXchange). This consortium works to realise a specification in order to define a data model for profile information that relate customers of enterprises. The specification also defines metadata to associate privacy control on customers information, and a protocol for query, deliver and update these information. CPEX refers to other standards such as XML, P3P, LDAP/DSML, AUO.

In a step 25, the archive file (.jar) is opened by the class loader of the sandbox 11 associated to the browser 15 for the purpose of generating the set of classes contained within the service, and links interfaced methods to the corresponding implemented sandbox methods. In particularly, the signature of the .jar archive file is used for selecting one particular secure class loader among a set of predefined class loaders, and permission in order to control and isolate the service application. The secure class loader is used to open the jar archive file, in order to generate the classes of the java code. By choosing a selected class loader, the process enables a direct association between the security policy and the originator of the service being downloaded. It can be seen that the signature is used to check the integrity of the file and, also, to select a particular security policy mechanism.

Therefore, it can be seen that the conventional Application Programming Interface (API) which is used for generating the sandbox upon the reception of the set of java classes is modified for the purpose of processing the java classes coming from a determined service provider. Therefore, a set of selective and personalised permissions and access rights can be associated to some services received from some service providers. The set of permissions is used for providing a selective access to at least one profile file, for instance a profile containing private user data.

The corresponding java code is compiled with the appropriate access rights to the user's profile. These rights allow or refuse the access for the missing data to personalize the service. Then the code used to sort the remote information is executed within the extended and personalized sandbox.

When the result of the process is available, it is transmitted back to the user and/or web server 3 or to a different web service provider 4 through the service cache 101 operating as a proxy. The web service 3 or 4 can then prepare a well-tailored offered which will be transmitted back to the web browser 15 of the client.

It can be seen that a very personalised transaction can be achieved in a personalized and secured environment. The service is cached within the service cache 101, and the signature is used for validating the applet being downloaded and, additionally, servers for personalizing the access rights to be assigned to the applet. The access rights can be defined in a very flexible way, simply by introducing new java classes in the compile code by means of the predefined jar loader. Therefore, a given service corresponding to a flight-booking service may be allowed to get access to the user's profile, and particularly to the private section precising the composition of the family, the different options which are usually favoured by the family etc... On the other hand, the service may not be allowed to access other part of the profile relating to medical or professional information, for instance.

The personalization can be rendered very flexible since one single jar loader may even provide a precise and full control over the different branches and sections of the user's profile.

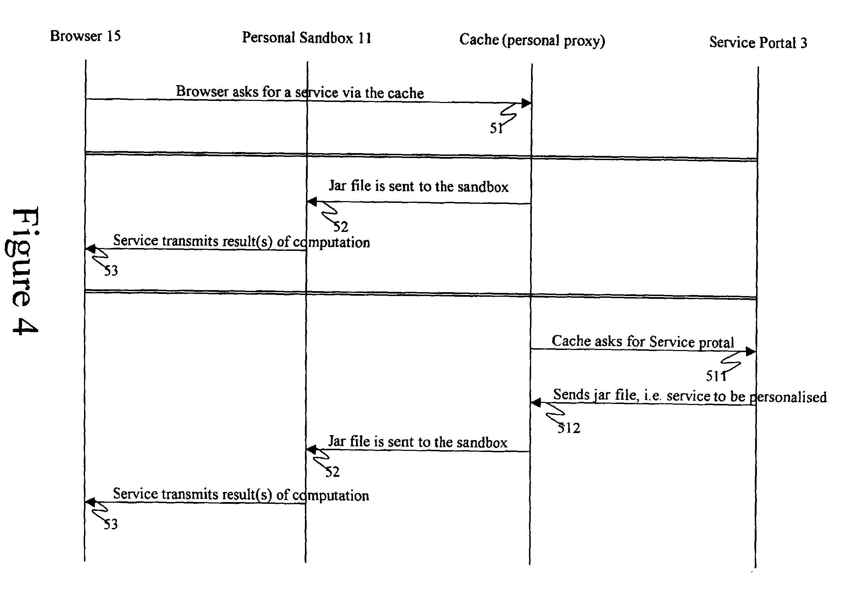

Figure 4 illustrates the different messages which are exchanged by the different elements in the negotiation process. Upon request of the user, as referenced by arrow 11, the browser transmits a request to web server 3 for the purpose of downloading an appropriate Applet, which request is intercepted by the service cache 101. If the service package is available in service cache 101, then the service cache 101 returns it to the sandbox of browser 105, as represented by arrow 52. Conversely, if the service package is not available, a request is prepared by service cache and forwarded to the web server 3, as shown by arrow 511. The web server 3 creates an archive file and transmits it to the service cache 101, as illustrated by arrow 512. The sandbox executes the downloaded service which access the private data loaded within the user's profile, and when the result is available, it is transferred to the user browser in order to wait for his user input, for instance.

It can therefore be seen how easy it is to personalize communication between the user and service providers even in the case of a discontinuous connection with the Internet, while securing the use of the private data loaded within the user's profile file.

In the following description, there will be described a specific structure of a profile file and the example of the access to that profile file.

The kind of access that is allowed to a profile depends on the context of the use. Data are created, updated, deleted and consulted, according to what they are used for. In this way, it is not always necessary to provide the full set of personal data to a user or a service. Contexts have to be created.

According to this, when a service requests for data in order to personalise itself, it has to link its requests to a context. For instance, a "travel booking service" has a legitimate reason to ask for a number of children but an "Grocery buying online service" does not and should not be allowed to ask such a question. Asking a credit card number is justified by a final booking phase but should be disallowed for mere data research. It is the aim of the profile access user's permissions to control, enable and disable the access to the user's personal data.

With respect to figure 5, there is shown a preferred embodiment of a user platform in a java environment. The Personalised environment 410 comprises a jar loader 420 which is linked to the personal sandbox 430 and service cache 101. Three interfaces, namely a remote exchanges interface 440, a profile interface 450, and a user interface 460 are used for exchanging data with other parts of the system. In the jar file there are three types of data which are used for embodying the service: Imported Data 470; Service Code 480 and Requested Data 490. The Imported data 470 are provided by the service providers and describes the offers which are available. The service code 480 describes how to match or personalize the specific offer made to the user, based or using the imported data filtered by elements taken from the user's profile, i.e. the Requested Data 490. In order to access the personal data stored in the user's profile, the Service has to access the Profile Interface 450 which implements the specific context security policy. This is achieved by using a set of signatures (not shown). In Requested Data 490, a method such as "ask for" will request a name in the given context, for instance "travel booking". In order to interact with the user, the service has to use an User interface 460 which implements the appropriate functionalities for the device. Clearly the complexity of the user interface depends upon the particular device being involved, for instance a Personal Digital Assistant (P.D.A.), a personal computer, a mobile telephone, or even an Internet watch... It can be seen that flags 161, 162, 163 respectively used to check the time validity and the dependencies needed by the service are into the service file.

In the particular case where some results of the execution of the service need to be transmitted back to a service provider, the service communicates via the Remote Exchanges Interface 440 which limits the communication and the kind of information which is reported back to the service provider. This is an additional advantage since it provides a high level of flexibility in the control of the data which is received and analysed, including the full control on the use of the results of that analysis which is possibly reported back to the service provider.

It can be seen that potentially any type of service could take advantage of the architecture shown in figure 5 and could be cached within service cache 101. In the case of travel booking service, for instance, the process executes the steps which were explained in detail with reference to the general flow charts of figures 2 and 3. In the case of travel booking, the user accesses the web portal (step 21 of fig. 2) of one travel service provider and requests the booking of a particular destination and date. The travel service provider then constructs a package to reply to the request which consists of offers appropriate to that request, code which, when executed, will personalize the choice and an indication of the data required from the user's profile. This is the archive file received by the user's device in the form of a jar archive file.

The jar archive is loaded by the jar loader as shown in step 24 and isolated immediately. This is achieved by means of the personal sandbox shown in figure 5. As known by the skilled man, the personal sandbox uses the text file embodying the Global Services Security Policy. It should be noticed that, in the preferred embodiment, the particular GSSP which is used allows no access on the user's resources or communication with the service provider. This is clearly an advantage because the user keeps control over the information which is likely to be reported back to the service provider.

The signature is used to identify the origin of the service and to associate a dedicated security policy in accordance with the user's privacy policy. To achieve this, the profile interfaces gets the contents of a text file containing the Context Security Policy which closely depends on the particular service being considered.

According to this specific security policy, the service asks for the requested data which are stored within the profile. The profile interface, implementing the controlled methods to access the profile, passes or blocks the data access.

The service code is then executed, using the combination of imported data provided by the service provider - for instance the choice of a destination of the flight to London plus a departure time as well as additional data specifying details of the offers matching the original request), and the data taken from the user's profile.

The description above illustrates how the architecture shown in figure 5 permits to embody any kind of service for enhancing security in the user's profile. Clearly, the architecture could even be used for embodying an authentication service arranged to cooperate with a smart card interface so as to permit validation of a service in accordance with the code typed by the user. Because only the service is being transmitted over the Internet, it is clear that the security of the personal data belonging to the user is substantially increased.

## Claims

1. Process for providing an electronic service through a telecommunication network, said process involving the steps of:
- constructing an electronic package including the code and data required for the execution of the service, and cache control information;
- transmitting said electronic package to a caching device for the purpose of caching said service in accordance with said cache control information.

2. Process in accordance to claim 1 wherein said electronic package is a .jar package comprising the method and classes for embodying a service executable by a client computer and further involving one cache control file for the purpose of controlling the caching operation of said electronic package within a service cache.

3. Process in accordance to claim 2 **characterized in that** said cache control file comprises a first field which defines whether the electronic service is cachable within said cache service (101).

4. Process according to claim 2 **characterized in that** said cache control file comprises a second field which defines the time of validity of said electronic service and, if necessary, if said service cache is requested to suppress the current service package and download an up-to-date version of the latter after the expiration of said validity.

5. Process according to claim 3 **characterized in that** said cache control file comprises a third field which defines the dependencies of the considered electronic service, that is to say the Uniform Resources Locators (U.R.L.) of the resources required for the execution of the service.

6. Process for executing an electronic service within a device connected to a private intranet network; **characterized in that** it involves the steps of:
- transmitting a request for said electronic service to a caching device located within said private communication network;
- determining within said caching device whether said service is already cached and, if so, receiving and executing said electronic service from said caching device.

7. Process in accordance to claim 6 wherein said electronic package is a .jar package comprising the method and classes for embodying a service executable by a client computer and further involving one cache control file for the purpose of controlling the caching operation of said electronic package within a service cache.

8. Process in accordance to claim 7 **characterized in that** said cache control file comprises a first field which defines whether the electronic service is cachable within said cache service (101).

9. Process according to claim 7 **characterized in that** said cache control file comprises a second field which defines the time of validity of said electronic service and, if necessary, if said service cache is requested to suppress the current service package and download an up-to-date version of the latter after the expiration of said validity.

10. Process according to claim 8 **characterized in that** said cache control file comprises a third field which defines the dependencies of the considered electronic service, that is to say the Uniform Resources Locators (U.R.L.) of the resources required for the execution of the service.

11. Process for executing an electronic service which is downloadable from a service server throughout a telecommunication network, which process comprises the steps of:
- constructing an electronic package which comprises the methods and classes for embodying a service executable by a client computer and further involving one additional cache control file for the purpose of controlling the caching operation of said electronic package within a service cache;
- downloading said electronic package within a service cache of an Intranet and extracting from said package said cache control file;
- caching said electronic service within said proxy in accordance with the information contained within said cache control file.
- executing said electronic service within any device communicating with said proxy.

12. Process according to claim 11 **characterized in that** said cache control file comprises a first field which defines whether the electronic service is cachable within said cache service (101).

13. Process according to claim 12 **characterized in that** said cache control file comprises a second field which defines the time of validity of said electronic service and, if necessary, if said service cache is requested to suppress the current service package and download an up-to-date version of the latter after the expiration of said validity.

14. Process according to claim 13 **characterized in that** said cache control file comprises a third field which defines the dependencies of the considered electronic service, that is to say the Uniform Resources Locators (U.R.L.) of the resources required for the execution of the service.

15. Cache system for electronic services to be distributed to a set of devices attached to an intranet network, said system being arranged to receive downloadable services from a service server throughout a telecommunication network, said service being packaged under the form of an electronic file comprising data, code associated with cache control information, said system being **characterized in that** it further comprises:
- means of receiving said downloadable service;
- means for storing said downloadable services;
- means for extracting said cache control information and for controlling the caching of said service accordingly.

16. Cache system according to claim 15 **characterized in that** it comprises means for reading the contents of said cache control file and for automatically downloading a more recent version of said downloadable service after the expiration of a period defined within said cache control file.

17. Cache system according to claim 16 **characterized in that** it comprises means for storing and maintaining a table of dependencies corresponding to the different services being downloaded and stored, said dependencies defining the condition of use of the services.

18. Computer client comprising means for performing anyone of the process as defined in claims 1 to 14.

19. Portable Digital Assistant comprising means for performing anyone of the process as defined in claims 11 to 14.

20. A computer program product having program code elements for carrying out a process as claimed in any of claims 1 to 14.
